(19) Europäisches Patentamt / European Patent Office / Office européen des brevets

(11) **EP 2 215 467 B1**

(12) **EUROPEAN PATENT SPECIFICATION**

(45) Date of publication and mention
of the grant of the patent:
**04.04.2012 Bulletin 2012/14**

(21) Application number: **08855233.6**

(22) Date of filing: **24.11.2008**

(51) Int Cl.:
*G01N 30/26* (2006.01)    *G01N 33/15* (2006.01)
*B01L 9/00* (2006.01)    *A61L 2/00* (2006.01)
*B01J 19/00* (2006.01)    *B01L 3/02* (2006.01)
*B05B 1/00* (2006.01)

(86) International application number:
**PCT/US2008/084567**

(87) International publication number:
**WO 2009/070540 (04.06.2009 Gazette 2009/23)**

(54) **PREPARING A TITRATION SERIES**

VORBEREITUNG EINER TITRIERREIHE

PRÉPARATION D'UNE SÉRIE DE TITRAGES

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **27.11.2007 US 4365**

(43) Date of publication of application:
**11.08.2010 Bulletin 2010/32**

(73) Proprietor: **Hewlett-Packard Development
Company, L.P.
Houston, TX 77070 (US)**

(72) Inventor: **PETERS, Kevin F.
Corvallis
Oregon 97330 (US)**

(74) Representative: **Zimmermann, Tankred Klaus
Schoppe, Zimmermann, Stöckeler & Zinkler
Patentanwälte
Postfach 246
82043 Pullach bei München (DE)**

(56) References cited:
**EP-A2- 1 209 467       WO-A1-01/43876
WO-A1-98/52047       WO-A1-03/072258
JP-A- 2005 052 148    KR-A- 20020 021 810
KR-B1- 100 715 698    US-A1- 2002 187 478**

## Description

BACKGROUND

When performing testing of substances such as drugs or other chemicals in a liquid, doses of a reagent are transferred to receptacles. Often it is desirable to conduct tests in which dose amounts vary significantly, for example, over five to eight orders of magnitude,

Because of limitations in the accuracy of providing small reagent dose amounts directly to a receptacle, it is customary to add a reagent dose to an receptacle and then serially dilute the resulting reagent into additional receptacles in a series of dilution steps until the desired series of reagent concentrations are obtained. Such serial dilutions can be slow, error-prone and wasteful.

It is desirable to provide a way to introduce small reagent doses directly to a receptacle without the requirement of using serial dilutions.

BRIEF DESCRIPTION OF THE DRAWINGS

Figure 1 is a simplified block diagram of a dosing system in accordance with an embodiment of the present invention.

Figure 2 is a simplified block diagram showing additional detail pertaining to fluid ejection devices within the dosing system shown in Figure 1 in accordance with an embodiment of the present invention.

Figure 3, Figure 4 and Figure 5 show various arrangements of nozzles on fluid ejection devices in accordance with embodiments of the present invention.

Figure 6 is a flowchart that describes dosing of a reagent into receptacles in accordance with an embodiment of the present invention.

DESCRIPTION OF THE EMBODIMENT

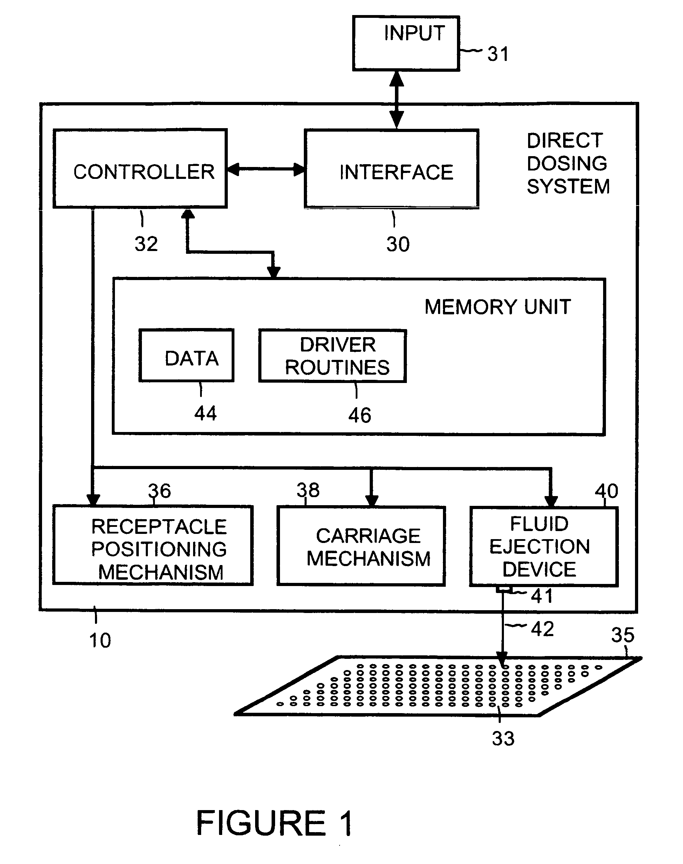

Figure 1 is a simplified block diagram of a dosing system 10. Dosing system 10 includes, for example, a controller 32 that, via an interface unit 30, can receive input 31 from a computer system or some other device. The interface unit 30 facilitates the transferring of data and command signals to controller 32 for dosing purposes.

in order to store data, at least temporarily, dosing system 10 includes a memory unit 34. For example, memory unit 34 is divided into a plurality of storage areas that facilitate dosing operations. The storage areas include a data storage area 44 and driver routines 46.

Data area 44 stores data files that define dose amounts to be placed within receptacles 33 on a receptacle tray 35. Driver routines 46 contain routines for controlling the dosing process. Driver routines 46 include, for example, the routines that control a receptacle positioning mechanism for moving the receptacle tray 35 in preparation for dosing. Driver routines 46 also can include, for example, the routines that control a carriage mechanism 38 that causes a fluid ejection device carriage unit to be moved over various receptacles. For example a single fluid ejection device carriage may be used to transport many fluid ejection devices. For example the reagent used for reagent doses is a sample such as an experimental drug sample. Alternatively, the reagent may be another chemical that gets combined in a receptacle with a sample. In this case the reagent may be, for example, a DNA primer used in a polymerase chain reaction to replicate a particular region of DNA, that gets combined in a receptacle with a sample.

In operation, dosing system 10 responds to commands to place reagent doses into receptacles 33.

Controller 32 forwards firing data to one or more fluid ejection devices, represented in Figure 1 by a fluid ejection device 40. For example, fluid ejection device 40 is a thermal inkjet printhead or some other entity capable of ejecting fluid such as a multi-nozzle drop generator or a thin film piezo-MEMS inkjet printing device. The firing data sent to fluid ejection device 40 is used to control the fluid ejection elements associated with the nozzles of fluid ejection device 40. This is represented in Figure 1 by reagent 42 being ejected from a nozzle 41.

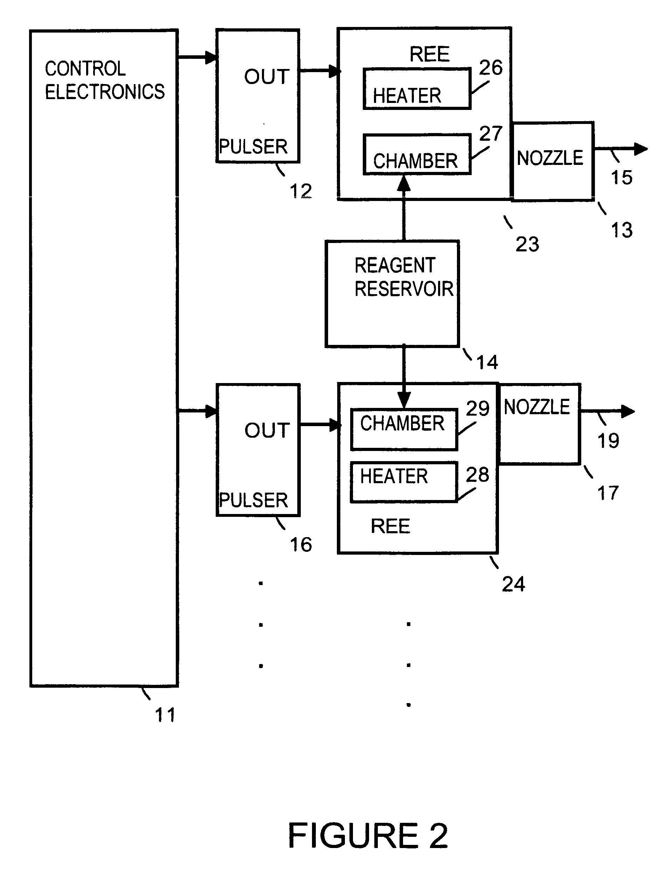

For example, as shown in Figure 2, firing data is used by a pulser 12 to generate pulses that control a reagent ejection element (REE) 23 associated with a nozzle 13 located on a fluid ejection device 40. Pulser 12 may be located on or off fluid ejection device 40, depending on the particular embodiment of the present invention. In the example shown in Figure 2, control electronics 11 provides to pulser 12 fluid ejection device firing data including information that sets the pulse rate and information that indicates which pulses are to be forwarded to reagent ejection element 23. For example, control electronics 11 are included within controller 32. The pulses forwarded to reagent ejection element 23 are forwarded as a current pulse that is applied to a heater 26 within reagent ejection element 23. For example heater 26 is a resistor. The current pulse through heater 26 provides thermal energy that causes reagent within chamber 27 to vaporize or partially vaporize and to be emitted from nozzle 13 as a reagent droplet 15. In between firing cycles, chamber 27 is refilled with reagent from reagent reservoir 14.

Fluid ejection device firing data generated by controller 32 is also used by a pulser 16 to generate pulses that control a reagent ejection heating element (REE) 24 associated with a nozzle 17. Control electronics 11 provides to pulser 16 fluid ejection device firing data that sets the pulse rate and indicates which pulses are to be forwarded to reagent ejection element 24. The pulses forwarded to reagent ejection element 24 are forwarded as a current pulse that is applied to a resistor within reagent ejection element 24. The pulses forwarded to reagent ejection element 24 are forwarded as a current pulse that is applied to a heater 28 within reagent ejection element 24. For example, heater 28 is a resistor. The current pulse through heater 28 provides thermal energy that causes reagent within chamber 29 to vaporize or partially vaporize and to be emitted from nozzle 17 as a reagent droplet 19. In between firing cycles, chamber 29 is refilled with reagent from reagent reservoir 14.

For example, nozzle 15, nozzle 17 and reagent reservoir 14 are all located on fluid ejection device 40. Nozzle 15 and nozzle 17 are exemplary as each fluid ejection device can have many nozzles.

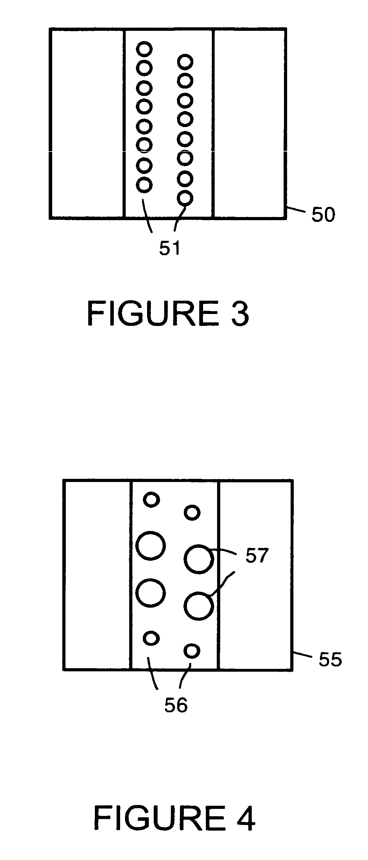

For example, Figure 3, Figure 4 and Figure 5 show various arrangements of nozzles on fluid ejection devices. In Figure 3, sixteen nozzles 51 are arranged on a fluid ejection device 50. For example, fluid ejection device 50 is implemented by a 1.3 millimeter (mm) by 2.5 mm die. As will be understood by persons of skill in the art, the number of nozzles per fluid ejection device and the dimensions of the fluid ejection device will vary depending upon desired design constraints.

For example, each of nozzles 51 has a diameter of 30 microns allowing for the ejection of droplets of about 10 picoLiters (pL), depending upon many parameters in addition to nozzle diameter, such as chamber dimensions, ejection energy, reagent boiling temperature, reagent viscosity and so on.

In Figure 4, four smaller nozzles 56 and four larger nozzles 57 are arranged as shown on a fluid ejection device 55. For example, fluid ejection device 55 is implemented by a 1.3 millimeter (mm) by 2.5 mm die. For example, each of nozzles 56 has a diameter of 30 microns allowing for the ejection of droplets of about 10 picoLiters (pL), depending upon many parameters in addition to nozzle diameter, as discussed above. For example, each of nozzles 57 has a diameter of 50 microns allowing for the ejection of droplets of about 100 picoLiters (pL), depending upon many parameters in addition to nozzle diameter, as discussed above.

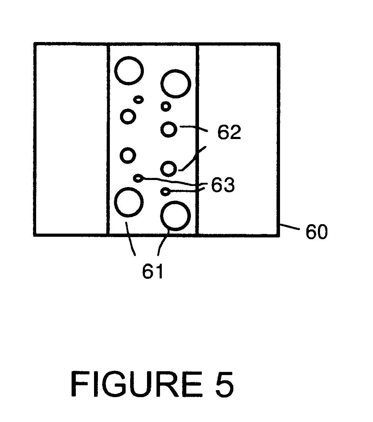

In Figure 5, four smaller nozzles 63, four intermediate sized nozzles 62 and four larger nozzles 61 are arranged as shown on a fluid ejection device 60. For example, fluid ejection device 60 is implemented by a 1.3 mm by 2.5 mm die. For example, each of nozzles 63 has a diameter of about 3 microns allowing for the ejection of droplets of about 0.06 pL, depending upon many parameters in addition to nozzle diameter, as discussed above. For example, each of nozzles 62 has a diameter of 30 microns allowing for the ejection of droplets of about 10 pL, depending upon many parameters in addition to nozzle diameter, as discussed above. For example, each of nozzles 61 has a diameter of 50 microns allowing for the ejection of droplets of about 100 picoLiters (pL), depending upon many parameters in addition to nozzle diameter, as discussed above.

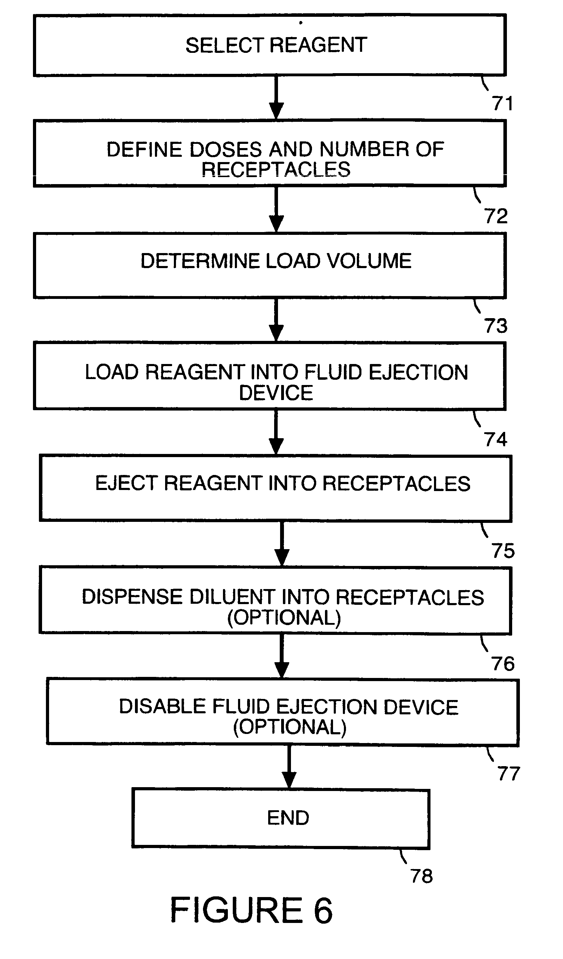

Figure 6 is a flowchart that describes dosing of reagents into a receptacle. In a block 71, the particular type of reagent is selected. For example, the reagent is an experimental drug compound that has been dissolved at 10 milliMolar concentration in DMSO solvent, or any other type of reagent that is to be dosed. The type of reagent will be selected based on the type of test to be performed and the type of assay which is to be used for the test. Another example is the Dose-Response analysis of the potency of an experimental drug that reacts to inhibit an assay of a molecular disease target. Here, the experimental drug is typically titrated from concentrate at 10 millimolar to a series of increasingly dilute concentrations from 100 micromolar down to 1 nanomolar, for example.

In a block 72, the details of the test are defined. For example, range of dilution to be tested is determined. Also the number of receptacles to be used is defined and the volume and type of assay in each receptacle is determined. For example, a typical test will require the receptacles to be dosed to twelve different reagent concentrations spanning six orders of magnitude (six decades), the spacing between reagent concentrations being at half an order of magnitude (half decade). The testing is typically performed in triplicate so that three receptacles are dosed for each reagent concentration, requiring dosing of thirty-six receptacles for each test.

For example, if after placing reagent in a receptacle to produce an assay within the receptacle, the highest reagent concentration for the assay is $1 \times 10^{-4}$ molar, then a typical test might additionally require assays with the following reagent concentrations: $1 \times 10^{-4}$ molar, $3 \times 10^{-5}$ molar, $1 \times 10^{-5}$ molar, $3 \times 10^{-6}$ molar, $1 \times 10^{-6}$ molar, $3 \times 10^{-7}$ molar, $1 \times 10^{-7}$ molar, $3 \times 10^{-8}$ molar, $1 \times 10^{-8}$ molar, $3 \times 10^{-9}$ molar, $1 \times 10^{-9}$ molar, and $3 \times 10^{-10}$ molar. The above described test is a titration series that includes concentrations that are evenly spaced at twelve points over six orders of magnitude at half-decade concentrations from $3 \times 10^{-10}$ molar up to $1 \times 10^{-4}$ molar. If a particular test requires more decades of dose range than a single fluid ejection device can enable, then a second fluid ejection device can be used into which is loaded pre-diluted reagent. This use of pre-diluted reagent allows for smaller concentrations of reagent to be placed in receptacles.

While a typical test may use, in triplicate, twelve different doses, with resulting dose concentrations separated by a half decade, it will be understood by persons of ordinary skill in the art that the parameters for tests can vary widely dependent upon desired testing criteria. The amount of redundancy, the number of doses and the particular dose concentrations can vary depending upon the particular study being performed.

Evenly spaced titration series are commonly used for testing; however, a particular test may require a titration series that is unevenly spaced across concentration decades. For example, a user may have some prior knowledge of an expected outcome of assays performed across a full titration range. For example, the user may expect that an assay becomes inhibited by a given inhibitor at a dose of approximately $1 \times 10^{-8}$ molar and may therefore desire to dose at, for example: $1 \times 10^{-5}$ molar, $1 \times 10^{-6}$ molar, $3 \times 10^{-7}$ molar, $1 \times 10^{-7}$ molar, $5 \times 10^{-8}$ molar, $3 \times 10^{-8}$ molar, $2 \times 10^{-8}$ molar, $1 \times 10^{-8}$ molar, $5 \times 10^{-9}$ molar, $3 \times 10^{-9}$ molar, $1 \times 10^{-9}$ molar, $7 \times 10^{-10}$

molar, and 3 x $10^{-10}$ molar. This unevenly distributed titration series provides for optimal return of assay information across the titration series while saving the effort and investment of doing an assay at a dose--such as, 3 x $10^{-6}$ molar--where the assay result might be less informative.

In a block 73, total load volume for a fluid ejection device is determined. This optional block is used to prevent reagent waste. For example, the reagent reservoir, such as reagent reservoir 14 shown in Figure 2, is sufficiently large to hold enough reagent to provide the thirty-six reagent doses required for a typical test. The total load volume is determined by summing the required amount of reagent to perform all the doses and then including a bit more to assure that the amount of reagent in the reagent reservoir will be more than sufficient to perform the test. If a particular test were to require more reagent than could be contained in the reagent reservoir for a single fluid ejection device, multiple fluid ejection devices or multiple loading of the single fluid ejection device would be used for the test. Calculation of the total load volume can be eliminated for those cases where efficient use of reagent is not important. In this case, a reagent reservoir can be filled and utilized and the extra reagent can simply be discarded.

In a block 74, the determined amount of load volume of the reagent is loaded into the reagent reservoir of the fluid ejection device. This is done, for example, using a micro pipette or a pin. The fluid ejection device may require a minimum amount of reagent (e.g. 1 microLiter) to be placed in the reagent reservoir for correct operation. In addition, the reagent reservoir will have a maximum capacity selected by the manufacturer. Typically this will be selected based on the capacity that is anticipated to perform tests. At this point, a tray of receptacles would be loaded into the dosing system in preparation to receive doses of the reagent.

In a block 75, the reagent doses are ejected from the fluid ejection device into the receptacles. This is done by positioning one or more fluid ejection devices over each receptacle and firing one or more nozzles of the fluid ejection device until the correct dose volume of the reagent has been transferred into the receptacle. The minimum dosing increment is a single drop. The minimum dosing increment can be as small as 0.06 picoLiters, in accordance with an example given above.

The number of drops (D) required to be transferred into each receptacle depends on the required reagent concentration ($R_C$) in the receptacle, the volume of assay in the receptacle ($V_a$), the volume per drop ($V_D$), and the concentration of reagent ($D_C$) in each drop, calculated as set out in Equation 1 below:

$$\text{Equation 1}$$
$$D = R_C * V_a / (V_D * D_C)$$

Versatility can be added by using different size drops, controlled by nozzle size and other parameters as discussed above. Dose size is limited by the smallest drop size. For example, for the nozzle arrangement shown in Figure 5, a drop size of 0.01 pL is possible. The nozzle arrangement shown in Figure 5 also has four nozzles able to produce drops with a volume of 100 pL. Dose time is limited by the drop size or sizes and by the number of drops of that size or sizes.. For example, when a fluid ejection device fires 100 pL droplets from ten nozzles fires at a firing frequency of approximately 50,000 Hertz per nozzle, a dose volume of 5 microliters can be achieved in approximately 0.1 seconds. For example, having a smallest drop size of 5 picoLiters enables a smallest dose size, and further having a largest drop size of 10 picoLiters may in most cases reduce the dose time by half.

In a block 76, additional diluent can be dispensed into the receptacles. This dilution of the assay with an additional diluent can be performed before or after reagent is placed in the receptacles, or not at all depending on the requirements of a particular test. In most cases, use of a fluid ejection device to provide reagent will allow the generation of a titration series without the use of any additional diluent nor an intermediate dilution receptacle. The fluid ejection device provides the reagent directly into the receptacle where it is combined with other reagents to form an assay.

In a block 76, the fluid ejection device is disabled from dispensing additional reagent. For example, the fluid ejection device is disabled by discarding or destroying the fluid ejection device. This is done, for example, to prevent future contamination. This step can be optional, dependent upon the test performed, the reagent used and the testing protocols. In a block 77, the dosing of the reagent is complete.

The foregoing discussion discloses and describes merely exemplary methods and embodiments. As will be understood by those familiar with the art, the disclosed subject matter may be embodied in other specific forms without departing from the spirit or characteristics thereof. Accordingly, the present disclosure is intended to be illustrative, but not limiting, of the scope of the invention, which is set forth in the following claims.

**Claims**

1. A method for preparing a titration series, comprising:

    loading (74) reagent into a reagent reservoir (14) within a fluid ejection device (40); and,
    ejecting reagent (75) from the fluid ejection device (40) into a plurality of receptacles so that an amount of reagent ejected from the fluid ejection device (40) into a first receptacle in a plurality of receptacles is at least 10,000 times an amount of reagent ejected from the fluid ejection device (40) into a second receptacle in the plurality of receptacles, **characterised in that** ejecting (75) reagent includes ejecting drops from a plurality of nozzles (56, 57; 61, 62, 63) of the fluid ejection device (40), wherein the plurality of nozzles (56, 57; 61, 62, 63) includes nozzles of at least two different diameters.

2. A method as in claim 1 wherein ejecting reagent includes:

transferring reagent from the reagent reservoir (14) into a chamber (27, 29) of the fluid ejection device (40); and, vaporizing a portion of reagent within the chamber (27, 29) so that the reagent within the chamber (27, 29) is ejected from the chamber (27, 29) through one of the nozzles (56, 57; 61, 62, 63) into the receptacle.

3. A method as in claim 1 wherein ejecting reagent includes:

ejecting drops from a nozzle of the fluid ejection device (40) at a firing frequency above 5000 Hertz.

4. A method as in claim 1 wherein ejecting reagent includes:

ejecting from the fluid ejection device (40) a drop of reagent, the drop having a volume that is less that 100 picoliters.

5. A method as in claim 1 wherein ejecting reagent includes:

ejecting drops from the plurality of nozzles (56, 57; 61, 62, 63) of the fluid ejection device (40), so that first drops ejected from a first nozzle (57; 61) in the plurality of nozzles (56, 57; 61, 62, 63) have at least twice the volume of second drops ejected from a second nozzle (56; 62, 63) in the plurality of nozzles.

6. A method as in claim 1 wherein ejecting reagent from the fluid ejection device (40) includes distributing reagent into the plurality of receptacles so that the titration is unevenly spaced across concentration decades.

7. A method as in claim 1, further comprising adding a volume of diluent to the receptacles to dilute to desired concentrations reagent ejected into the plurality of receptacles.

8. A method as in claim 1 where the reagent is an experimental drug reagent.

9. A method as in clam 1 additionally comprising:

adding a second reagent into the plurality of receptacles, and measuring resultant reagent mixtures.

10. A dosing system for preparing a titration series, comprising:

a fluid ejection device (40), the fluid ejection device (40) including:

a reagent reservoir (14) used to hold reagent, and a plurality of nozzles (56, 57; 61, 62, 63) arranged to provide the fluid ejection device (40) capability of ejecting reagent through the nozzles (56, 57; 61, 62, 63) into a plurality of receptacles so that an amount of reagent ejected from the fluid ejection device (40) into a first receptacle in a plurality of receptacles is at least 10,000 times an amount of reagent ejected from the fluid ejection device (40) into a second receptacle in the plurality of receptacles, **characterised in that**

the plurality of nozzles (56, 57; 61, 62, 63) includes nozzles of at least two different diameters.

11. A dosing system as in claim 10 additionally comprising:

the plurality of receptacles; and a mechanism that positions the receptacles with respect to the fluid ejection device (40) so that reagent ejected through a nozzle enters a corresponding one of the receptacles.

12. A dosing system as in claim 10 wherein each nozzle in the plurality of nozzles (56, 57; 61, 62, 63) is associated with a chamber (27, 29) from a plurality of chambers that receive reagent from the reagent reservoir (14) and with a heater (26, 28) from a plurality of heaters, wherein the fluid ejection device (40) ejects reagent using a heater (26, 28) to vaporize a portion of reagent within a chamber (27, 29) so that the reagent within the chamber (27, 29) is ejected from the chamber (27, 29) through an associated nozzle (56, 57; 61, 62, 63).

13. A dosing system as in claim 10, comprising:

a thermal inkjet printhead or a piezoelectric inkjet printhead in fluid communication with the reagent reservoir (14) and comprising the plurality of nozzles (56, 57;61,62,63).

14. A fluid ejection device as in Claim 13, wherein the printhead is further configured to eject drops of reagent at a frequency above 5000 Hertz.

**Patentansprüche**

1. Ein Verfahren zum Vorbereiten einer Titrationsreihe, das folgende Schritte aufweist:

Laden (74) eines Reagens in ein Reagensreservoir (14) in einer Fluidausstoßvorrichtung (40); und
Ausstoßen des Reagens (75) von der Fluidausstoßvorrichtung (40) in eine Mehrzahl von Aufnahmeeinrichtungen, so dass eine Reagensmenge, die von der Fluidausstoßvorrichtung (40) in eine erste Aufnahmeeinrichtung einer Mehrzahl von Aufnahmeeinrichtungen ausgestoßen wird, mindestens 10.000-mal eine Reagensmenge ist, die von der Fluidausstoßvorrichtung (40) in eine zweite Aufnahmeeinrichtung der Mehrzahl von Aufnahmeeinrichtungen ausgestoßen wird, **dadurch gekennzeichnet, dass**
Ausstoßen (75) von Reagens das Ausstoßen von Tropfen von einer Mehrzahl von Düsen (56, 57; 61, 62, 63) der Fluidausstoßvorrichtung (40) umfasst, wobei die Mehrzahl von Düsen (56, 57; 61, 62, 63) Düsen mit zumindest zwei unterschiedlichen Durchmessern umfasst.

2. Ein Verfahren gemäß Anspruch 1, bei dem das Ausstoßen von Reagens folgende Schritte aufweist:

Übertragen von Reagens von dem Reagensreservoir (14) in eine Kammer (27, 29) der Fluidausstoßvorrichtung (40); und
Verdampfen eines Teils des Reagens in der Kammer (27, 29), so dass das Reagens in der Kammer (27, 29) von der Kammer (27, 29) durch eine der Düsen (56, 57; 61, 62, 63) in die Aufnahmeeinrichtung ausgestoßen wird.

3. Ein Verfahren gemäß Anspruch 1, bei dem das Ausstoßen von Reagens folgenden Schritt aufweist:

Ausstoßen von Tropfen von einer Düse der Fluidausstoßvorrichtung (40) mit einer Abfeuerungsfrequenz über 5000 Hertz.

4. Ein Verfahren gemäß Anspruch 1, bei dem das Ausstoßen von Reagens folgenden Schritt aufweist:

Ausstoßen eines Reagenstropfens von der Fluidausstoßvorrichtung (40), wobei der Tropfen ein Volumen aufweist, das geringer ist als 100 Picoliter.

5. Ein Verfahren gemäß Anspruch 1, bei dem das Ausstoßen von Reagens folgenden Schritt aufweist:

Ausstoßen von Tropfen von der Mehrzahl von Düsen (56, 57; 61, 62, 63) der Fluidausstoßvorrichtung (40), so dass erste Tropfen, die von einer ersten Düse (57; 61) der Mehrzahl von Düsen (56, 57; 61, 62, 63) ausgestoßen werden, zumindest zweimal das Volumen von zweiten Tropfen haben, die von einer zweiten Düse (56; 62, 63) der Mehrzahl von Düsen ausgestoßen werden.

6. Ein Verfahren gemäß Anspruch 1, bei dem das Ausstoßen von Reagens von der Fluidausstoßvorrichtung (40) das Verteilen von Reagens in die Mehrzahl von Aufnahmeeinrichtungen umfasst, so dass die Titration über Konzentrationsdekaden ungleich verteilt ist.

7. Ein Verfahren gemäß Anspruch 1, das ferner das Hinzufügen eines Verdünnervolumens zu den Aufnahmeeinrichtungen aufweist, um zu gewünschten Konzentrationen von Reagens zu verdünnen, das in die Mehrzahl von Aufnahmeeinrichtungen ausgestoßen wird.

8. Ein Verfahren gemäß Anspruch 1, bei dem das Reagens ein Versuchsmedikamentreagens ist.

9. Ein Verfahren gemäß Anspruch 1, das zusätzlich folgenden Schritt aufweist:

Hinzufügen eines zweiten Reagens in die Mehrzahl von Aufnahmeeinrichtungen, und Messen resultierender Reagensmischungen.

10. Ein Dosiersystem zum Vorbereiten einer Titrationsreihe, das folgende Merkmale aufweist:

eine Fluidausstoßvorrichtung (40), wobei die Fluidausstoßvorrichtung (40) folgende Merkmale aufweist:

ein Reagensreservoir (14), das verwendet wird, um Reagens aufzunehmen, und
eine Mehrzahl von Düsen (56, 57; 61, 62, 63), die angeordnet sind, um die Fähigkeit der Fluidausstoßvorrichtung (40), Reagens durch die Düsen (56, 57; 61, 62, 63) in eine Mehrzahl von Aufnahmeeinrichtungen auszustoßen, bereitzustellen, so dass eine Reagensmenge, die von der Fluidausstoßvorrichtung (40) in eine erste Aufnahmeeinrichtung einer Mehrzahl von Aufnahmeeinrichtungen ausgestoßen wird, zumindest 10.000-mal eine Reagensmenge ist, die von der Fluidausstoßvorrichtung (40)

(40) in eine zweite Aufnahmeeinrichtung der Mehrzahl von Aufnahmeeinrichtungen ausgestoßen wird, **dadurch gekennzeichnet, dass**

die Mehrzahl von Düsen (56, 57; 61, 62, 63) Düsen mit zumindest zwei unterschiedlichen Durchmessern umfasst.

11. Ein Dosiersystem gemäß Anspruch 10, das zusätzlich folgende Merkmale aufweist:

die Mehrzahl von Aufnahmeeinrichtungen; und einen Mechanismus, der die Aufnahmeeinrichtungen bezüglich der Fluidausstoßvorrichtung (40) platziert, so dass das Reagens, das durch eine Düse ausgestoßen wird, in eine entsprechende der Aufnahmeeinrichtungen eindringt.

12. Ein Dosiersystem gemäß Anspruch 10, bei dem jede Düse der Mehrzahl von Düsen (56, 57; 61, 62, 63) einer Kammer (27, 29) von einer Mehrzahl von Kammern zugeordnet ist, die Reagens von dem Reagensreservoir (14) empfangen, und mit einem Heizelement (26, 28) von einer Mehrzahl von Heizelementen, wobei die Fluidausstoßvorrichtung (40) Reagens unter Verwendung eines Heizelements (26, 28) ausstößt, um einen Teil des Reagens in einer Kammer (27, 29) zu verdampfen, so dass das Reagens in der Kammer (27, 29) von der Kammer (27, 29) durch eine zugeordnete Düse (56, 57; 61, 62, 63) ausgestoßen wird.

13. Ein Dosiersystem gemäß Anspruch 10, das folgendes Merkmal aufweist:

einen thermischen Tintenstrahldruckkopf oder einen piezoelektrischen Tintentstrahldruckkopf, der in Fluidkommunikation mit dem Reagensreservoir (14) ist und die Mehrzahl von Düsen (56, 57; 61, 62, 63) aufweist.

14. Eine Fluidausstoßvorrichtung (40) gemäß Anspruch 13, bei der der Druckkopf ferner konfiguriert ist, um Reagenstropfen mit einer Frequenz über 5000 Hertz auszustoßen.

**Revendications**

1. Procédé pour préparer une série de titrages, comprenant:

charger (74) un réactif dans un réservoir à réactif (14) dans un dispositif d'éjection de fluide (40); et
éjecter du réactif (75) du dispositif d'éjection de fluide (40) vers une pluralité de réceptacles, de sorte qu'une quantité de réactif éjectée du dispositif d'éjection de fluide (40) vers un premier réceptacle parmi une pluralité de réceptacles soit au moins 10.000 fois une quantité de réactif éjectée du dispositif d'éjection de fluide (40) vers un deuxième réceptacle parmi la pluralité de réceptacles,

**caractérisé par le fait que**
l'éjection (75) de réactif comporte le fait d'éjecter des gouttes d'une pluralité de tuyères (56, 57; 61, 62, 63) du dispositif d'éjection de fluide (40), où la pluralité de tuyères (56, 57; 61, 62, 63) comporte des tuyères d'au moins deux diamètres différents.

2. Procédé selon la revendication 1, dans lequel l'éjection de réactif comporte:

transférer du réactif du réservoir à réactif (14) vers une chambre (27, 29) du dispositif d'éjection de fluide (40); et
vaporiser une partie du réactif dans la chambre (27, 29), de sorte que le réactif dans la chambre (27, 29) soit éjecté de la chambre (27, 29) à travers l'une des tuyères (56, 57; 61, 62, 63) vers le réceptacle.

3. Procédé selon la revendication 1, dans lequel l'éjection de réactif comporte:

éjecter des gouttes d'une tuyère du réactif dans la chambre (40) à une fréquence de déclenchement au-dessus de 5000 Hertz.

4. Procédé selon la revendication 1, dans lequel l'éjection de réactif comporte:

éjecter une goutte de réactif du dispositif d'éjection de fluide (40), la goutte présentant un volume qui est inférieur à 100 picolitres.

5. Procédé selon la revendication 1, dans lequel l'éjection de réactif comporte:

éjecter des gouttes de la pluralité de tuyères (56, 57; 61, 62, 63) du dispositif d'éjection de fluide (40), de sorte que les premières gouttes éjectées d'une première tuyère (57; 61) parmi la pluralité de tuyères (56, 57; 61, 62, 63) présentent au moins deux fois le volume des deuxièmes gouttes éjectées d'une deuxième tuyère (56; 62, 63) parmi la pluralité de tuyères.

6. Procédé selon la revendication 1, dans lequel l'éjection de réactif du dispositif d'éjection de fluide (40) comporte le fait de distribuer du réactif vers la pluralité de réceptacles, de sorte que le titrage soit espacé de manière non uniforme dans les décades de concentration.

**7.** Procédé selon la revendication 1, comprenant par ailleurs le fait d'ajouter un volume de diluant aux réceptacles, pour diluer aux concentrations désirées le réactif éjecté vers la pluralité de réceptacles.

**8.** Procédé selon la revendication 1, dans lequel le réactif est un réactif médicament expérimental.

**9.** Procédé selon la revendication 1, comprenant en outre:

ajouter un deuxième réactif dans la pluralité de réceptacles, et mesurer les mélanges de réactifs résultants.

**10.** Système de dosage pour préparer une série de titrages, comprenant:

un dispositif d'éjection de fluide (40), le dispositif d'éjection de fluide (40) comportant: un réservoir à réactif (14) utilisé pour contenir du réactif, et une pluralité de tuyères (56, 57; 61, 62, 63) disposées de manière à conférer au dispositif d'éjection de fluide (40) la capacité d'éjecter du réactif à travers les tuyères (56, 57; 61, 62, 63) vers une pluralité de réceptacles, de sorte qu'une quantité de réactif éjectée du dispositif d'éjection de fluide (40) vers un premier réceptacle parmi une pluralité de réceptacles soit au moins 10.000 fois une quantité de réactif éjectée du dispositif d'éjection de fluide (40) vers un deuxième réceptacle parmi la pluralité de réceptacles,

**caractérisé par le fait que**
la pluralité de tuyères (56, 57; 61, 62, 63) comporte des tuyères d'au moins deux diamètres différents.

**11.** Système de dosage selon la revendication 10, comprenant en outre:

la pluralité de réceptacles; et
un mécanisme qui positionne les réceptacles par rapport au dispositif d'éjection de fluide (40) de sorte que le réactif éjecté à travers une tuyère entre dans l'un correspondant des réceptacles.

**12.** Système de dosage selon la revendication 10, dans lequel chaque tuyère parmi la pluralité de tuyères (56, 57; 61, 62, 63) est associée à une chambre (27, 29) parmi une pluralité de chambres qui reçoit le réactif du réservoir à réactif (14) et à un dispositif chauffant (26, 28) parmi une pluralité de dispositifs chauffants, dans lequel le dispositif d'éjection de fluide (40) éjecte du réactif à l'aide d'un dispositif chauffant (26, 28) pour vaporiser une partie du réactif dans une chambre (27, 29) de sorte que le réactif dans la chambre (27, 29) soit éjecté de la chambre (27, 29) à travers une tuyère associée (56, 57; 61, 62, 63).

**13.** Système de dosage selon la revendication 10, comprenant:

une tête d'impression à jet d'encre thermique ou une tête d'impression à jet d'encre piézoélectrique en communication de fluide avec le réservoir à réactif (14) et comprenant la pluralité de tuyères (56, 57; 61, 62, 63).

**14.** Système de dosage selon la revendication 13, dans lequel la tête d'impression est par ailleurs configurée pour éjecter des gouttes de réactif à une fréquence au-dessus de 5000 Hertz.

FIGURE 1

FIGURE 2

50

51

FIGURE 3

57

55

56

FIGURE 4

# FIGURE 5

```
┌─────────────────────────────────────┐
│            SELECT REAGENT            │
└─────────────────────────────────────┘
                    │  ↘ 71
                    ▼
┌─────────────────────────────────────┐
│     DEFINE DOSES AND NUMBER OF       │
│            RECEPTACLES               │
└─────────────────────────────────────┘
                    │  ↘ 72
                    ▼
┌─────────────────────────────────────┐
│        DETERMINE LOAD VOLUME         │
└─────────────────────────────────────┘
                    │  ↘ 73
                    ▼
┌─────────────────────────────────────┐
│    LOAD REAGENT INTO FLUID EJECTION  │
│               DEVICE                 │
└─────────────────────────────────────┘
                    │  ↘ 74
                    ▼
┌─────────────────────────────────────┐
│     EJECT REAGENT INTO RECEPTACLES   │
└─────────────────────────────────────┘
                    │  ↘ 75
                    ▼
┌─────────────────────────────────────┐
│  DISPENSE DILUENT INTO RECEPTACLES   │
│             (OPTIONAL)               │
└─────────────────────────────────────┘
                    │  ↘ 76
                    ▼
┌─────────────────────────────────────┐
│    DISABLE FLUID EJECTION DEVICE     │
│             (OPTIONAL)               │
└─────────────────────────────────────┘
                    │  ↘ 77
                    ▼
          ┌───────────────────┐
          │        END        │
          └───────────────────┘
                    ↘ 78
```

# FIGURE 6